# EUROPEAN PATENT APPLICATION

(11) **EP 3 629 219 A1**
(43) Date of publication of application: **01.04.2020**
(21) Application number: 18197060.9
(22) Date of filing: 27.09.2018
(51) Int. Cl.: G06K 7/10

(54) **RFID RECEIVER FOR AN ASSET TRACKING SYSTEM**

(71) Applicant: Bayer AG, 51373 Leverkusen (DE)
(72) Inventor: Bolivar Lopez, Julio Cesar, 40237 Düsseldorf (DE); Pleines, Julian, 51063 Köln (DE); Susanto, Samuel Ignatius, Kettering, OH 45429-0000 (US); Fritsch, Sebastian, 51377 Leverkusen (DE); Götzberger-Schad, Claudia, 42799 Leichlingen (DE)
(74) Representative: BIP Patents

(57) **Abstract**

The present invention relates to an RFID receiver for an asset tracking system. The RFID receiver comprises a plurality of RFID antennas. The plurality of RFID antennas are configured to be associated with an object support structure. The object support structure is configured such that one or more objects of a plurality of objects can be placed on the object support structure. A plurality of RFID tags are configured to attach to the plurality of objects. Each object of the plurality of objects can have attached to it a different RFID tag of the plurality of RFID tags. The RFID receiver is configured to detect a signal transmitted from an RFID tag attached to an object of the plurality of objects when the object is supported by the object support structure.

## Description

### FIELD OF THE INVENTION

The present invention relates to an RFID receiver for an asset tracking system and an asset tracking method, as well as to a computer program element and a computer readable medium.

### BACKGROUND OF THE INVENTION

The general background of this invention is asset tracking, for example in relation to sample storage performed for example by scientists. Scientists store samples in small tubes or vials, which are in turn stored in different containers; the most common ones being refrigerators and freezers but samples can be stored in cupboards or on open shelves. It is possible that a lab performing an analytical service handles more than 10k samples a year, and many of these samples are analysed a couple of times within long time intervals. A sample can change its location, moving from one fridge to another fridge or moving around within the same fridge, and indeed can move from one lab to another lab depending upon the analysis being performed. This results in a complex asset management operation of space and location. Because of this, not only is data integrity in sample inventory an issue, i.e. ensuring that data about sample location is available, but it can be extremely difficult for scientists to find samples. All of this results in very inefficient operations with paper-based solutions.

The many manual steps involved in placing samples within containers (fridges, freezers, shelves etc) demands a real-time solution connecting the gap between an automated error-free location acquisition and manual sample placements. But currently there is no mechanism for real-time asset tracking in labs, which efficiently works in different environments. Many current solutions focus only on software where manual registration and de-registration steps are required, thereby disturbing lab workflows. Automated scalable solutions with no additional steps are therefore needed in order to:
- Increase efficiency when searching for lab assets
- Reduce errors due to wrong identification or loss of samples
- Integrate with current freezers and hardware used at the labs, .i.e. differentiate from closed complete freezer solutions
- Comply with possible regulatory specifications regarding knowledge of specific sample locations

This is very difficult to achieve technically, made more difficult because the density of small assets within refrigerators and freezers is very high, due to the amount of vials that are normally stacked together. There are no known solutions which can be easily integrated into a current lab workflow in a way that permits the retro-fitting or extension of available storage solutions in a financially viable way. Thus, the main technical difficulties to solve are:
- The flexibility needed to automatically capture manual placement steps of vials
- The small size of vials which are normally used (cylindrical thin tubes of a variety of sizes and vendors, with diameters of e.g. 12.5mm, for example for Thermo Scientific Product ID 363401)
- The density, i.e. high number of vials in closed environments found e.g. in refrigerator
- The influence of a metallic environment and water-content of vials on available technologies

Therefore, there is a requirement to address these issues.

### SUMMARY OF THE INVENTION

It would be advantageous to have improved means for asset tracking.

The object of the present invention is solved with the subject matter of the independent claims, wherein further embodiments are incorporated in the dependent claims. It should be noted that the following described aspects and examples of the invention apply also for the RFID receiver for an asset tracking system, the asset tracking method, and for the computer program element and the computer readable medium.

In a first aspect, there is provided an RFID receiver for an asset tracking system, the RFID receiver comprising:
- a plurality of RFID antennas.

The plurality of RFID antennas are configured to be associated with an object support structure. The object support structure is configured such that one or more objects of a plurality of objects can be placed on the object support structure. A plurality of RFID tags are configured to attach to the plurality of objects. Each object of the plurality of objects can have attached to it a different RFID tag of the plurality of RFID tags. The RFID receiver is configured to detect a signal transmitted from an RFID tag attached to an object of the plurality of objects when the object is supported by the object support structure.

In an example, the plurality of RFID antennas are configured to be integrated into the object support structure.

In an example, the object support structure comprises a shelf, and wherein at least one subset of the plurality of RFID antennas is configured to be integrated into a base of the shelf.

In an example, at least one subset of the plurality of RFID antennas is configured to be integrated into a structure adjacent to the object support structure.

In an example, the object support structure comprises a shelf, and wherein the structure adjacent to the object support structure comprises a side wall structure.

In an example, the object support structure forms part of a refrigerator or cupboard.

In an example, the RFID receiver is a RFID transceiver and is configured to transmit an interrogation signal, and wherein the RFID tag is configured to detect the interrogation signal, and wherein the RFID tag is configured to transmit the signal in response to detection of the interrogation signal by the RFID tag.

In an example, the RFID receiver is configured to transmit the interrogation signal after a door of the refrigerator or cupboard has moved from an open position to a closed position.

In an example, the RFID receiver is configured to determine that the object is supported by the object support structure upon detection of the signal transmitted by the RFID tag.

In an example, the RFID receiver is configured to determine a location of the object when it is supported by the object support structure.

In an example, determination of the location of the object comprises utilisation of a detection signal acquired via at least one antenna of the plurality of antennas for the signal transmitted from the RFID tag.

In an example, the RFID receiver is configured to determine a first detection signal for a first antenna of the plurality of antennas for the signal transmitted from the RFID tag and determine at least one second detection signal for at least one second antenna of the plurality of antennas for the signal transmitted from the RFID tag. The determination of the location of the object cam comprise a comparison of the first detection signal with the at least one second detection signal.

In an example, the RFID receiver is configured to determine a third detection signal for a third antenna of the plurality of antennas for the signal transmitted from the RFID tag and determine at least one fourth detection signal for at least one fourth antenna of the plurality of antennas for the signal transmitted from the RFID tag. The first antenna and the at least one second antenna are in a first sub-set of the plurality of antennas and the third antenna and the at least one fourth antenna are in a second sub-set of the plurality of antennas. The determination of the location of the object can comprise a comparison of the third detection signal with the at least one fourth detection signal.

In an example, the RFID receiver is configurable, such that RFID antennas of at least one subset of the plurality of RFID antennas are positioned in a tile arrangement. An RFID antenna can be contiguous with a first RFID antenna on one side and contiguous with a second RFID antenna on an opposite side.

In an example, the RFID receiver is configurable, such that RFID antennas of at least one subset of the plurality of RFID antennas are positioned in a tile arrangement. An RFID antenna can be contiguous with a first RFID antenna on one side and contiguous with a second RFID antenna on an opposite side and contiguous with a third RFID antenna.

In an example, the RFID receiver is configurable, such that RFID antennas of at least one subset of the plurality of RFID antennas are positioned in a tile arrangement. An RFID antenna can be contiguous with a first RFID antenna on one side and contiguous with a second RFID antenna on an opposite side and contiguous with a third RFID antenna and contiguous with a fourth antenna.

In an example, the third RFID antenna is on an opposite side of the RFID antenna to the fourth RFID antenna.

In an example, the RFID receiver comprises a RFID reader connected to the plurality of RFID antennas.

In an example, the RFID receiver comprises a plurality of antenna hubs. The plurality of antenna hubs are configured to communicate with the RFID reader. A first antenna hub of the plurality of the antenna hubs is connected to a first subset of the plurality of antennas. A second antenna hub of the plurality of antenna hubs is connected to a second subset of the plurality of antennas that comprises different antennas to the antennas of the first subset.

In a second aspect, there is provided an asset tracking method, comprising:
a) associating a plurality of RFID antennas of a RFID receiver with an object support structure, wherein the object support structure is configured such that one or more objects of a plurality of objects can be placed on the object support structure, and wherein a plurality of RFID tags are attached to the plurality of objects, wherein each object of the plurality of objects has attached to it a different RFID tag of the plurality of RFID tags; and
b) detecting by the RFID receiver a signal transmitted from an RFID tag attached to an object of the plurality of objects when the object is supported by the object support structure.

In an example, the plurality of RFID antennas are integrated into the object support structure.

In an example, the object support structure comprises a shelf, and wherein at least one subset of the plurality of RFID antennas is integrated into a base of the shelf.

In an example, at least one subset of the plurality of RFID antennas are integrated into a structure adjacent to the object support structure.

In an example, the object support structure comprises a shelf, and wherein the structure adjacent to the object support structure comprises a side wall structure.

In an example, the object support structure forms part of a refrigerator or cupboard.

In an example, the RFID receiver is a RFID transceiver and transmits an interrogation signal, and wherein the signal transmitted from the RFID tag is transmitted in response to the RFID tag detecting the interrogation signal.

In an example, the RFID receiver transmits the interrogation signal after a door of the refrigerator or cupboard has moved from an open position to a closed position.

In an example, the RFID receiver determines that the object is supported by the object support structure upon detection of the signal transmitted by the RFID tag.

In an example, the RFID receiver determines a location of the object when it is supported by the object support structure.

In an example, determination of the location of the object comprises utilising a detection signal acquired via at least one antenna of the plurality of antennas for the signal transmitted from the RFID tag.

In an example, the RFID receiver determines a first detection signal for a first antenna of the plurality of antennas for the signal transmitted from the RFID tag and determines at least one second detection signal for at least one second antenna of the plurality of antennas for the signal transmitted from the RFID tag. The determination of the location of the object can comprise comparing the first detection signal with the at least one second detection signal.

In an example, the RFID receiver determines a third detection signal for a third antenna of the plurality of antennas for the signal transmitted from the RFID tag and determines at least one fourth detection signal for at least one fourth antenna of the plurality of antennas for the signal transmitted from the RFID tag. The first antenna and the at least one second antenna are in a first sub-set of the plurality of antennas and the third antenna and the at least one fourth antenna are in a second sub-set of the plurality of antennas. The determination of the location of the object can comprise a comparison of the third detection signal with the at least one fourth detection signal.

In an example, the RFID receiver is configurable, such that RFID antennas of at least one subset of the plurality of RFID antennas are positioned in a tile arrangement. An RFID antenna can be contiguous with a first RFID antenna on one side and contiguous with a second RFID antenna on an opposite side.

In an example, the RFID receiver is configurable, such that RFID antennas of at least one subset of the plurality of RFID antennas are positioned in a tile arrangement. An RFID antenna can be contiguous with a first RFID antenna on one side and contiguous with a second RFID antenna on an opposite side and contiguous with a third RFID antenna.

In an example, the RFID receiver is configurable, such that RFID antennas of at least one subset of the plurality of RFID antennas are positioned in a tile arrangement. An RFID antenna can be contiguous with a first RFID antenna on one side and contiguous with a second RFID antenna on an opposite side and contiguous with a third RFID antenna and contiguous with a fourth antenna.

In an example, the third RFID antenna is on an opposite side of the RFID antenna to the fourth RFID antenna.

In an example, the RFID receiver comprises a RFID reader connected to the plurality of RFID antennas.

In an example, the RFID receiver comprises a plurality of antenna hubs, wherein the plurality of antenna hubs communicate with the RFID reader. A first antenna hub of the plurality of the antenna hubs is connected to a first subset of the plurality of antennas. A second antenna hub of the plurality of antenna hubs is connected to a second subset of the plurality of antennas that comprises different antennas to the antennas of the first subset.

According to another aspect, there is provided a computer program element for controlling an apparatus as previously described, which when executed by a processor is configured to carry out the method as previously described.

According to another aspect, there is provided a computer readable medium having stored computer element as previously described.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of an asset tracking apparatus;
Fig. 2 shows a schematic set up of an example of an asset tracking system;
Fig. 3 shows an asset tracking method;
Fig. 4 shows a schematic set up of an example of a RFID receiver;
Fig. 5 shows an asset tracking method;
Fig. 6 shows a schematic representation of a detailed example of an asset tracking system;
Fig. 7 shows a detailed flow diagram of operational steps for the asset tracking system of Fig. 6;
Fig. 8 shows schematic representations of arrangements of antennas of the RFID receiver;
Fig. 9 shows a representation of positioning of antennas array within a refrigerator that can hold RFID tagged vials;
Fig. 10 shows a representation of arrangement of antennas of an RFID receiver in shelves of a refrigerator; and
Fig. 11 shows a representation of arrangement of antennas of an RFID receiver in a shelf and side wall of a refrigerator.

### DETAILED DESCRIPTION OF EMBODIMENTS

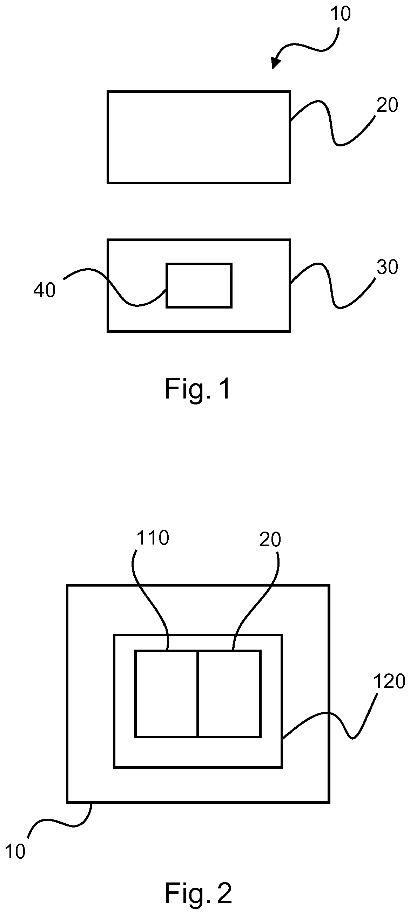

Fig. 1 shows an asset tracking apparatus 10. The asset tracking apparatus comprises a plurality of RFID tags 20, and a RFID receiver 30. The plurality of RFID tags are configured to attach to a plurality of objects. Each object of the plurality of objects can have attached to it a different RFID tag of the plurality of RFID tags. The RFID receiver comprises a plurality of RFID antennas 40. The plurality of RFID antennas are configured to be associated with an object support structure. The object support structure is configured such that one or more objects of the plurality of objects can be placed on the object support structure. The RFID receiver is configured to detect a signal transmitted from an RFID tag attached to an object of the plurality of objects when the object is supported by the object support structure.

In other words, an asset tracking system is provided for the tracking of a number of objects wirelessly. As the RFID receiver has a number of RFID antennas the asset tracking system can be used in a number of different situations. This is because having an RFID receiver with a number of RFID antennas these can be arranged in a flexible manner to meet a user's needs. Furthermore, through utilisation of a number of antennas localisation of an object to which an RFID tag is attached is provided.

In this manner, it can be determined if an object with an RFID tag is supported by the object support structure.

In an example, the RFID tags are active, and therefore the asset tracking system can be a Passive Reader Active Tag (PRAT) system, where the RFID receiver receives signals from active RFID tags that can be battery operated and transmit only.

In an example, the RFID tags are active, and the asset tracking system can be an Active Reader Active Tag (ARAT) system, where active tags are awoken with an interrogator signal from the active reader, and where the active tags can be battery operated.

In an example, the RFID tags are passive, and the asset tracking system can be an Active Reader Passive Tag (ARPT) system, where the RFID receive sends an interrogator signal the power from which is used to enable a passive tag to transmit its own replies to the RFID receiver.

In an example, the object support structure is configured flexibly such that one or more objects of the plurality of objects can be placed on the object support structure

According to an example, the plurality of RFID antennas are configured to be integrated into the object support structure.

In an example, the plurality of RFID antennas are configured to be flexibly integrated into the object support structure

According to an example, the object support structure comprises a shelf. At least one subset of the plurality of RFID antennas are configured to be integrated into a base of the shelf.

In this manner, not only can it be determined that an object sitting on the shelf is indeed on the shelf, as the RFID receiver has a number of RFID antennas the position of the object on the shelf can be determined due to different magnitudes of signals detected via different antennas. At one level only one antenna detects a signal from which it can be determined that the object is above that antenna, and at a second level a number of antennas detect different signal levels and this can be used to determine a position of the object with the RFID tag, in a similar way to which a radar phased array determines the location of an object scattering radio waves.

In an example, there can be a number of shelves each with an antenna array integrated into the base of each shelf.

In an example, there can be a number of shelves, with only one shelf having an antenna array integrated into its base. Thus that antenna array can detect signals from RFID tags attached to objects sitting on that shelf, as well as to RFID tags attached to objects siting on shelfs below that shelf and above that shelf.

According to an example, at least one subset of the plurality of RFID antennas is/are configured to be integrated into a structure adjacent to the object support structure.

In an example, the at least one subset of the plurality of RFID antennas configured to be integrated into a base of the shelf is different to the at least one subset of the plurality of RFID antennas configured to be integrated into a structure adjacent to the object support structure.

Thus, a vertical position of an RFID tag can be determined. Also, when a base of at least one shelf also has an array of antennas, both the vertical and horizontal position of a RFID tag can be determined, enabling a 3D position of an object with that RFID tag to be determined for example in a refrigerator or cupboard.

In an example, the structure adjacent to the object support structure is internal to a refrigerator or cupboard.

In an example, the structure adjacent to the object support structure is external to a refrigerator or cupboard.

According to an example, the object support structure comprises a shelf. The structure adjacent to the object support structure comprises a side wall structure.

In an example, the side wall structure is a part of the shelf.

In an example, the side wall structure is separate to the self.

In an example, the structure adjacent to the object support structure is a side wall or rear wall of refrigerator or cupboard.

According to an example, the object support structure forms part of a refrigerator or cupboard.

According to an example, the RFID receiver is a RFID transceiver and is configured to transmit an interrogation signal. The RFID tag is configured to detect the interrogation signal, and the RFID tag is configured to transmit the signal in response to detection of the interrogation signal by the RFID tag.

Thus, the asset tracking system can be an ARAT or ARPT system.

According to an example, the RFID receiver is configured to transmit the interrogation signal after a door of the refrigerator or cupboard has moved from an open position to a closed position.

In this manner, power is saved because it is only when a door of the refrigerator or cupboard is opened that an object can be moved, added or removed. Thus, when the door is closed after having been opened, the asset tracking system can determined if an object has been moved, added or removed, and only does this when the door has been closed from an open position, thereby providing for object tracking in an energy saving manner.

Thus, the RFID receiver need not transmit a signal upon a door moving from an open to a closed position, but there are certain advantages if it does so.

In an example, the RFID receiver is configured to transmit an interrogation signal periodically.

In an example, the RFID receiver is configured to transmit an interrogation signal continuously.

In this manner, the transmission of the interrogation signal need not be event dependent, but can be transmitted continuously and/or on a periodic basis. In this way, a simple system tis provided that does not need to monitor events.

According to an example, the RFID receiver is configured to determine that the object is supported by the object support structure upon detection of the signal transmitted by the RFID tag.

Thus, from the strength of the signal detected by the RFID receiver, or that a signal has been detected, it can be determined that the object is within proximity of the object support structure, and it can also be determined that the object has not moved and therefore is supported by the object support structure. Also, in an example it can be determined that the object is within a fridge or cupboard and that the door is closed and as such that the object is supported in some way by the object support structure.

According to an example, the RFID receiver is configured to determine a location of the object when it is supported by the object support structure.

According to an example, determination of the location of the object comprises utilisation of a detection signal acquired via at least one antenna of the plurality of antennas for the signal transmitted from the RFID tag.

In this manner, the position of the RFID tag can be determined in a similar manner to how phased array radar antennas work, except that the timing of detection signals is not necessarily required to be detected, rather signal magnitudes detected by different antennas can be used to "triangulate" the position of an RFID tag. Indeed, a signal detected by only one antenna can be used to determine that the RFID tab is above (or below) that antenna and thereby locate the object to which the RFID tag is attached.

According to an example, the RFID receiver is configured to determine a first detection signal for a first antenna of the plurality of antennas for the signal transmitted from the RFID tag and determine at least one second detection signal for at least one second antenna of the plurality of antennas for the signal transmitted from the RFID tag. The determination of the location of the object comprises a comparison of the first detection signal with the at least one second detection signal.

Thus, when the signal is read by one of the antennas the location can already be approximated, and further signals from further antennas are used to more accurately specify the object location.

According to an example, the RFID receiver is configured to determine a third detection signal for a third antenna of the plurality of antennas for the signal transmitted from the RFID tag and determine at least one fourth detection signal for at least one fourth antenna of the plurality of antennas for the signal transmitted from the RFID tag. The first antenna and the at least one second antenna are in a first sub-set of the plurality of antennas and the third antenna and the at least one fourth antenna are in a second sub-set of the plurality of antennas. The determination of the location of the object comprises a comparison of the third detection signal with the at least one fourth detection signal.

According to an example, the RFID receiver is configurable, such that RFID antennas of at least one subset of the plurality of RFID antennas are positioned in a tile arrangement. An RFID antenna can contiguous with a first RFID antenna on one side and contiguous with a second RFID antenna on an opposite side.

In an example, the tile arrangement is a 1-D line arrangement.

According to an example, the RFID receiver is configurable, such that RFID antennas of at least one subset of the plurality of RFID antennas are positioned in a tile arrangement. An RFID antenna can be contiguous with a first RFID antenna on one side and contiguous with a second RFID antenna on an opposite side and contiguous with a third RFID antenna.

In an example, the tile arrangement is a 2-D arrangement of at least two RFID antennas wide.

According to an example, the RFID receiver is configurable, such that RFID antennas of at least one subset of the plurality of RFID antennas are positioned in a tile arrangement. An RFID antenna can contiguous with a first RFID antenna on one side and contiguous with a second RFID antenna on an opposite side and contiguous with a third RFID antenna and contiguous with a fourth antenna.

In an example, the tile arrangement is a 2-D arrangement of at least three RFID antennas wide.

According to an example, the third RFID antenna is on an opposite side of the RFID antenna to the fourth RFID antenna.

According to an example, the RFID receiver comprises a RFID reader connected to the plurality of RFID antennas.

According to an example, the RFID comprises a plurality of antenna hubs. The plurality of antenna hubs are configured to communicate with the RFID reader. A first antenna hub of the plurality of the antenna hubs is connected to a first subset of the plurality of antennas. A second antenna hub of the plurality of antenna hubs is connected to a second subset of the plurality of antennas that comprises different antennas to the antennas of the first subset.

In an example, the plurality of antenna hubs are configured to communicate wirelessly with the RFID reader.

In an example, the plurality of antenna hubs are connected to the RFID and configured to communicate via wired communication with the RFID reader.

Fig. 2 shows an example of an asset tracking system 100. The system comprises an asset tracking apparatus 10 described with reference to Fig. 1. The system also comprises a plurality of objects 110, and an object support structure 120. Each object of the plurality of objects has attached to it a different RFID tag of the plurality of RFID tags 20. The plurality of RFID antennas 40 are associated with the object support structure.

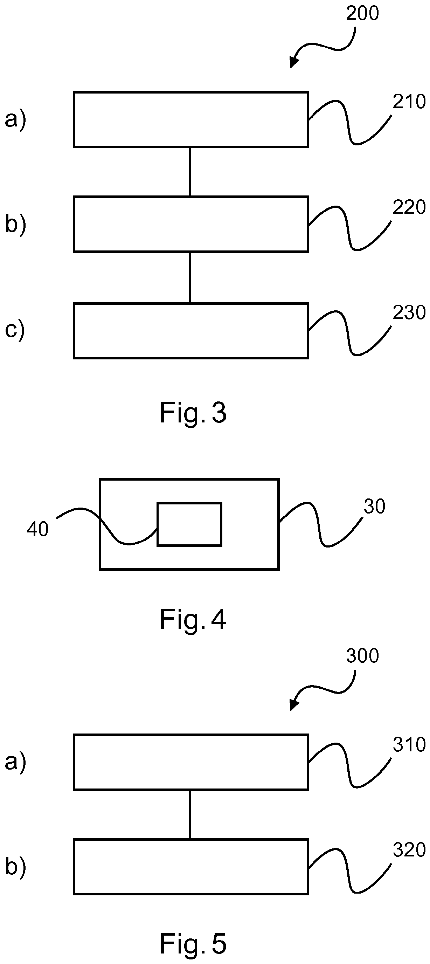

Fig. 3 shows an asset tracking method 200 in its basic steps. The method comprises:
in an attaching step 210, also referred to as step a), attaching a plurality of RFID tags 20 to a plurality of objects 110, wherein each object of the plurality of objects has attached to it a different RFID tag of the plurality of RFID tags;
in an associating step 220, also referred to as step b), associating a plurality of RFID antennas 40 with an object support structure 120, wherein the object support structure is configured such that one or more objects of the plurality of objects can be placed on the object support structure, and wherein an RFID receiver 30 comprises the plurality of RFID antennas;
in a detecting step 230, also referred to as step c), detecting by the RFID receiver a signal transmitted from an RFID tag attached to an object of the plurality of objects when the object is supported by the object support structure.

According to an example, the plurality of RFID antennas is integrated into the object support structure.

According to an example, the object support structure comprises a shelf, and at least one subset of the plurality of RFID antennas is/are integrated into a base of the shelf.

According to an example, at least one subset of the plurality of RFID antennas is/are integrated into a structure adjacent to the object support structure.

In an example, the at least one subset of the plurality of RFID antennas configured to be integrated into a base of the shelf is different to the at least one subset of the plurality of RFID antennas configured to be integrated into a structure adjacent to the object support structure.

According to an example, the object support structure comprises a shelf, and the structure adjacent to the object support structure comprises a side wall structure.

According to an example, the object support structure forms part of a refrigerator or cupboard.

According to an example, the RFID receiver is a RFID transceiver and transmits an interrogation signal. The signal transmitted from the RFID tag can then be transmitted in response to the RFID tag detecting the interrogation signal.

According to an example, the RFID receiver transmits the interrogation signal after a door of the refrigerator or cupboard has moved from an open position to a closed position.

Thus, the RFID receiver need not transmit a signal upon a door moving from an open to a closed position, but there are certain advantages if it does so.

In an example, the RFID receiver is configured to transmit an interrogation signal periodically.

In an example, the RFID receiver is configured to transmit an interrogation signal continuously. According to an example, the RFID receiver determines that the object is supported by the object support structure upon detection of the signal transmitted by the RFID tag.

According to an example, the RFID receiver determines a location of the object when it is supported by the object support structure.

According to an example, determination of the location of the object comprises utilising a detection signal acquired via at least one antenna of the plurality of antennas for the signal transmitted from the RFID tag.

According to an example, the RFID receiver determines a first detection signal for a first antenna of the plurality of antennas for the signal transmitted from the RFID tag and determines at least one second detection signal for at least one second antenna of the plurality of antennas for the signal transmitted from the RFID tag. The determination of the location of the object can comprise comparing the first detection signal with the at least one second detection signal.

According to an example, the RFID receiver determines a third detection signal for a third antenna of the plurality of antennas for the signal transmitted from the RFID tag and determines at least one fourth detection signal for at least one fourth antenna of the plurality of antennas for the signal transmitted from the RFID tag. The first antenna and the at least one second antenna are in a first sub-set of the plurality of antennas and the third antenna and the at least one fourth antenna are in a second sub-set of the plurality of antennas. The determination of the location of the object can then comprise a comparison of the third detection signal with the at least one fourth detection signal.

According to an example, the RFID receiver is configurable, such that RFID antennas of at least one subset of the plurality of RFID antennas are positioned in a tile arrangement. An RFID antenna can be contiguous with a first RFID antenna on one side and contiguous with a second RFID antenna on an opposite side.

According to an example, the RFID receiver is configurable, such that RFID antennas of at least one subset of the plurality of RFID antennas are positioned in a tile arrangement. An RFID antenna can be contiguous with a first RFID antenna on one side and contiguous with a second RFID antenna on an opposite side and contiguous with a third RFID antenna.

According to an example, the RFID receiver is configurable, such that RFID antennas of at least one subset of the plurality of RFID antennas are positioned in a tile arrangement. An RFID antenna can be contiguous with a first RFID antenna on one side and contiguous with a second RFID antenna on an opposite side and contiguous with a third RFID antenna and contiguous with a fourth antenna.

According to an example, the third RFID antenna can be on an opposite side of the RFID antenna to the fourth RFID antenna.

According to an example, the RFID receiver comprises a RFID reader connected to the plurality of RFID antennas.

According to an example, the RFID receiver comprises a plurality of antenna hubs. The plurality of antenna hubs communicate with the RFID reader. A first antenna hub of the plurality of the antenna hubs is connected to a first subset of the plurality of antennas. A second antenna hub of the plurality of antenna hubs is connected to a second subset of the plurality of antennas that comprises different antennas to the antennas of the first subset.

Fig. 4 shows an example of an RFID receiver 30 for an asset tracking system. The RFID receiver comprises a plurality of RFID antennas 40. The plurality of RFID antennas are configured to be associated with an object support structure. The object support structure is configured such that one or more objects of a plurality of objects can be placed on the object support structure. A plurality of RFID tags are configured to attach to the plurality of objects. Each object of the plurality of objects can have attached to it a different RFID tag of the plurality of RFID tags. The RFID receiver is configured to detect a signal transmitted from an RFID tag attached to an object of the plurality of objects when the object is supported by the object support structure.

In this manner, an RFID receiver with a number of RFID antennas is provided that can be used for the wireless tracking of items to which RFID tags have been fitted. The RFID receiver can be used in a number of different situations, because having a number of RFID antennas these can be arranged in a flexible manner to meet a user's needs. Furthermore, through utilisation of a number of antennas localisation of an object to which an RFID tag is attached is provided.

In this manner, the RFID receiver can be used to determine if an object with an RFID tag is supported by the object support structure.

In an example, the object support structure is configured flexibly such that one or more objects of the plurality of objects can be placed on the object support structure

According to an example, the plurality of RFID antennas is/are configured to be integrated into the object support structure.

In an example, the plurality of RFID antennas are configured to be flexibly integrated into the object support structure

According to an example, the object support structure comprises a shelf, and at least one subset of the plurality of RFID antennas is configured to be integrated into a base of the shelf.

According to an example, at least one subset of the plurality of RFID antennas is configured to be integrated into a structure adjacent to the object support structure.

In an example, the at least one subset of the plurality of RFID antennas configured to be integrated into a base of the shelf is different to the at least one subset of the plurality of RFID antennas configured to be integrated into a structure adjacent to the object support structure.

In an example, the structure adjacent to the object support structure is internal to a refrigerator or cupboard.

In an example, the structure adjacent to the object support structure is external to a refrigerator or cupboard.

According to an example, the object support structure comprises a shelf, and the structure adjacent to the object support structure comprises a side wall structure.

In an example, the side wall structure is a part of the shelf.

In an example, the side wall structure is separate to the self.

In an example, the structure adjacent to the object support structure is a side wall or rear wall of refrigerator or cupboard.

According to an example, the object support structure forms part of a refrigerator or cupboard.

According to an example, the RFID receiver is a RFID transceiver and is configured to transmit an interrogation signal, and the RFID tag is configured to detect the interrogation signal. The RFID tag is configured to transmit the signal in response to detection of the interrogation signal by the RFID tag.

According to an example, the RFID receiver is configured to transmit the interrogation signal after a door of the refrigerator or cupboard has moved from an open position to a closed position.

In an example, the RFID receiver is configured to detect that the door has moved from an open position to a closed position. For example, a relay can close when the door closes and following the closing of the relay, a signal can be sent to the RFID receiver that triggers the RFID receiver to transmit the interrogation signal. For example, a relay can open when the door opens and close when the door closes and following the opening and closing of the relay, a signal can be sent to the RFID receiver that triggers the RFID receiver to transmit the interrogation signal. The RFID receiver can be triggered to transmit the interrogation signal in a number of different ways on the basis of the door moving from an open position to a closed position.

Thus, the RFID receiver need not transmit a signal upon a door moving from an open to a closed position, but there are certain advantages if it does so.

In an example, the RFID receiver is configured to transmit an interrogation signal periodically.

In an example, the RFID receiver is configured to transmit an interrogation signal continuously.

According to an example, the RFID receiver is configured to determine that the object is supported by the object support structure upon detection of the signal transmitted by the RFID tag.

According to an example, the RFID receiver is configured to determine a location of the object when it is supported by the object support structure.

According to an example, the determination of the location of the object comprises utilisation of a detection signal acquired via at least one antenna of the plurality of antennas for the signal transmitted from the RFID tag.

According to an example, the RFID receiver is configured to determine a first detection signal for a first antenna of the plurality of antennas for the signal transmitted from the RFID tag and determine at least one second detection signal for at least one second antenna of the plurality of antennas for the signal transmitted from the RFID tag. The determination of the location of the object can comprise a comparison of the first detection signal with the at least one second detection signal.

Thus, when the signal is read by one of the antennas the location can already be approximated, and further signals from further antennas are used to more accurately specify the object location.

According to an example, the RFID receiver is configured to determine a third detection signal for a third antenna of the plurality of antennas for the signal transmitted from the RFID tag and determine at least one fourth detection signal for at least one fourth antenna of the plurality of antennas for the signal transmitted from the RFID tag. The first antenna and the at least one second antenna are in a first sub-set of the plurality of antennas and the third antenna and the at least one fourth antenna are in a second sub-set of the plurality of antennas. The determination of the location of the object comprises a comparison of the third detection signal with the at least one fourth detection signal.

According to an example, the RFID receiver is configurable, such that RFID antennas of at least one subset of the plurality of RFID antennas are positioned in a tile arrangement. An RFID antenna can be contiguous with a first RFID antenna on one side and contiguous with a second RFID antenna on an opposite side.

In an example, the tile arrangement is a 1-D line arrangement.

According to an example, the RFID receiver is configurable, such that RFID antennas of at least one subset of the plurality of RFID antennas are positioned in a tile arrangement. An RFID antenna can be contiguous with a first RFID antenna on one side and contiguous with a second RFID antenna on an opposite side and contiguous with a third RFID antenna.

In an example, the tile arrangement is a 2-D arrangement of at least two RFID antennas wide.

According to an example, the RFID receiver is configurable, such that RFID antennas of at least one subset of the plurality of RFID antennas are positioned in a tile arrangement. An RFID antenna can be contiguous with a first RFID antenna on one side and contiguous with a second RFID antenna on an opposite side and contiguous with a third RFID antenna and contiguous with a fourth antenna.

In an example, the tile arrangement is a 2-D arrangement of at least three RFID antennas wide.

According to an example, the third RFID antenna is on an opposite side of the RFID antenna to the fourth RFID antenna.

According to an example, the RFID receiver comprises a RFID reader connected to the plurality of RFID antennas.

According to an example, the RFID receiver comprises a plurality of antenna hubs. The plurality of antenna hubs are configured to communicate with the RFID reader. A first antenna hub of the plurality of the antenna hubs is connected to a first subset of the plurality of antennas. A second antenna hub of the plurality of antenna hubs is connected to a second subset of the plurality of antennas that comprises different antennas to the antennas of the first subset.

In an example, the plurality of antenna hubs are configured to communicate wirelessly with the RFID reader.

In an example, the plurality of antenna hubs are connected to the RFID and configured to communicate via wired communication with the RFID reader.

Fig. 5 shows an asset tracking method 300 in its basic steps. The method comprises:
in an associating step 310, also referred to as step a), associating a plurality of RFID antennas 40 of a RFID receiver 30 with an object support structure 120, wherein the object support structure is configured such that one or more objects of a plurality of objects 110 can be placed on the object support structure, and wherein a plurality of RFID tags 20 are attached to the plurality of objects, wherein each object of the plurality of objects has attached to it a different RFID tag of the plurality of RFID tags;
in a detecting step 320, also referred to as step b), detecting by the RFID receiver a signal transmitted from an RFID tag attached to an object of the plurality of objects when the object is supported by the object support structure.

According to an example, the plurality of RFID antennas are integrated into the object support structure.

According to an example, the object support structure comprises a shelf, and at least one subset of the plurality of RFID antennas is integrated into a base of the shelf.

According to an example, at least one subset of the plurality of RFID antennas are integrated into a structure adjacent to the object support structure.

In an example, the at least one subset of the plurality of RFID antennas configured to be integrated into a base of the shelf is different to the at least one subset of the plurality of RFID antennas configured to be integrated into a structure adjacent to the object support structure.

According to an example, the object support structure comprises a shelf, and wherein the structure adjacent to the object support structure comprises a side wall structure.

According to an example, the object support structure forms part of a refrigerator or cupboard.

According to an example, the RFID receiver is a RFID transceiver and transmits an interrogation signal. The signal transmitted from the RFID tag is transmitted in response to the RFID tag detecting the interrogation signal.

According to an example, the RFID receiver transmits the interrogation signal after a door of the refrigerator or cupboard has moved from an open position to a closed position.

According to an example, the RFID receiver determines that the object is supported by the object support structure upon detection of the signal transmitted by the RFID tag.

According to an example, the RFID receiver determines a location of the object when it is supported by the object support structure.

According to an example, the determination of the location of the object comprises utilising a detection signal acquired via at least one antenna of the plurality of antennas for the signal transmitted from the RFID tag.

According to an example, the RFID receiver determines a first detection signal for a first antenna of the plurality of antennas for the signal transmitted from the RFID tag and determines at least one second detection signal for at least one second antenna of the plurality of antennas for the signal transmitted from the RFID tag. The determination of the location of the object can comprise comparing the first detection signal with the at least one second detection signal.

According to an example, the RFID receiver determines a third detection signal for a third antenna of the plurality of antennas for the signal transmitted from the RFID tag and determines at least one fourth detection signal for at least one fourth antenna of the plurality of antennas for the signal transmitted from the RFID tag. The first antenna and the at least one second antenna are in a first sub-set of the plurality of antennas and the third antenna and the at least one fourth antenna are in a second sub-set of the plurality of antennas. The determination of the location of the object can comprise a comparison of the third detection signal with the at least one fourth detection signal.

According to an example, the RFID receiver is configurable, such that RFID antennas of at least one subset of the plurality of RFID antennas are positioned in a tile arrangement. An RFID antenna can be contiguous with a first RFID antenna on one side and contiguous with a second RFID antenna on an opposite side.

According to an example, the RFID receiver is configurable, such that RFID antennas of at least one subset of the plurality of RFID antennas are positioned in a tile arrangement. An RFID antenna can be contiguous with a first RFID antenna on one side and contiguous with a second RFID antenna on an opposite side and contiguous with a third RFID antenna.

According to an example, the RFID receiver is configurable, such that RFID antennas of at least one subset of the plurality of RFID antennas are positioned in a tile arrangement. An RFID antenna can be contiguous with a first RFID antenna on one side and contiguous with a second RFID antenna on an opposite side and contiguous with a third RFID antenna and contiguous with a fourth antenna.

According to an example, the third RFID antenna is on an opposite side of the RFID antenna to the fourth RFID antenna.

According to an example, the RFID receiver comprises a RFID reader connected to the plurality of RFID antennas.

According to an example, the RFID receiver comprises a plurality of antenna hubs. The plurality of antenna hubs communicate with the RFID reader. A first antenna hub of the plurality of the antenna hubs is connected to a first subset of the plurality of antennas. A second antenna hub of the plurality of antenna hubs is connected to a second subset of the plurality of antennas that comprises different antennas to the antennas of the first subset.

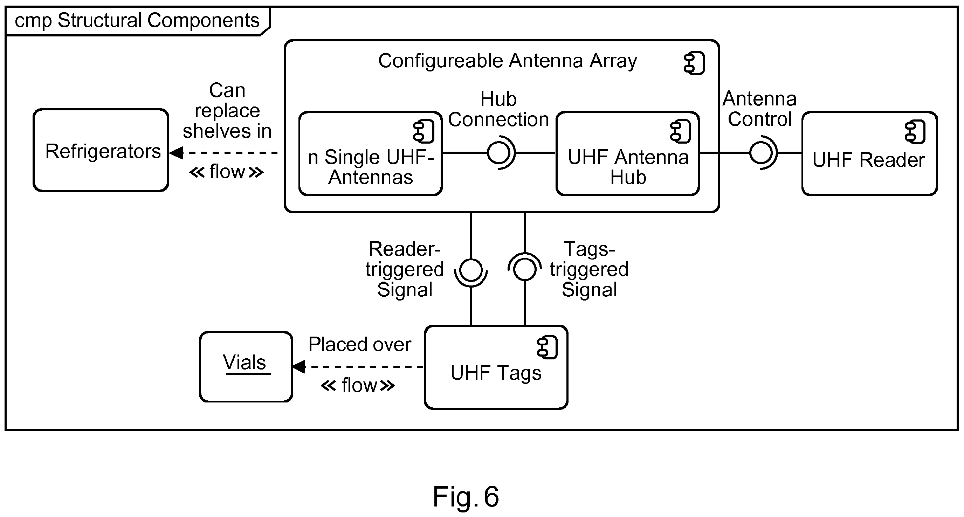

The asset tracking apparatus, asset tracking system, RFID receiver and associated methods are now described in further detail with reference to Figs. 6-11, which is described with specific reference to a fridge or refrigerator being used to hold vials.

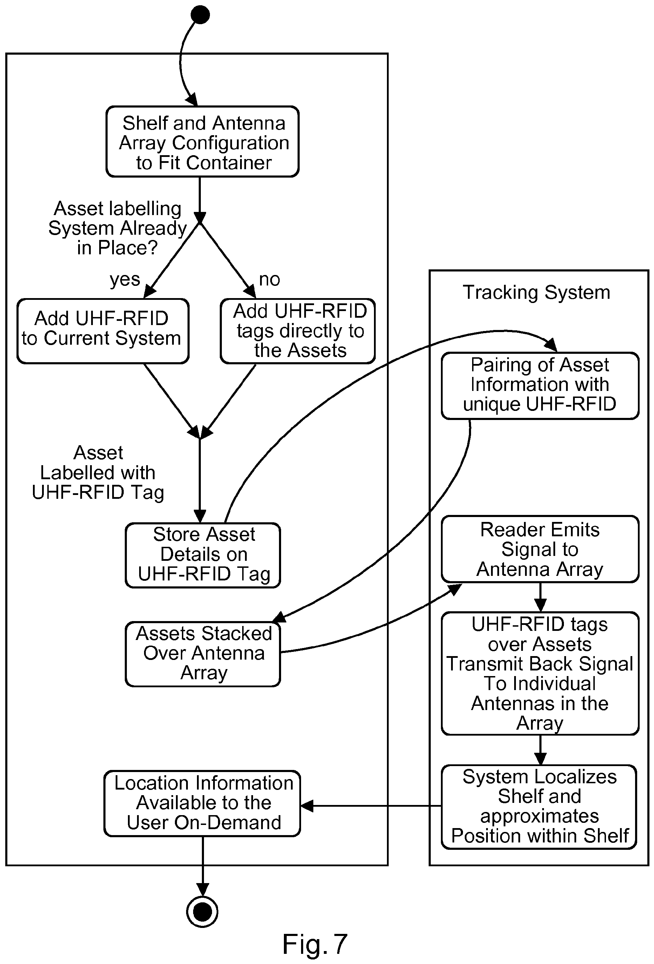

Fig. 6 shows a detailed example of an asset tracking system, with Fig. 7 showing a detailed workflow for that system. The new system is able to track in real-time hundreds of small vials. Given that scientists naturally stack vials filling up a dense space, the system is able to track these stacked small vials in metallic and non-metallic environments. The system can be used to inventory assets in temperatures ranging from room temperature to below -70°C. There is no need to perform any registration step. Scientists can place their samples over smart configurable shelves, within which are located antennas of a RFID receiver, and their location is wirelessly captured in real-time. The solution is provided using a combination of a newly designed UHF-RFID antenna array, very small UHF-Tags (1cm x 1cm) and a UHF-RFID reader that is connected to the antenna array via one or more antenna hubs. The antenna array, hub(s) and reader are termed a RFID receiver. The combination of these components solves the intrinsic problem between UHF RFIDs, water content and short reading ranges. It is possible to integrate this solution into current lab workflows by just "retro fitting" e.g. refrigerator shelves, with the smart configurable antenna version and by adding UHF-RFID tags either to the vials themselves or to a given barcode system. The usage of UHF-RFID tags ensure a financially viable solution for the many number of tags needed. The shelves can be flexible configured to fit different containers. All information is securely stored and presented to the users over web browser applications.

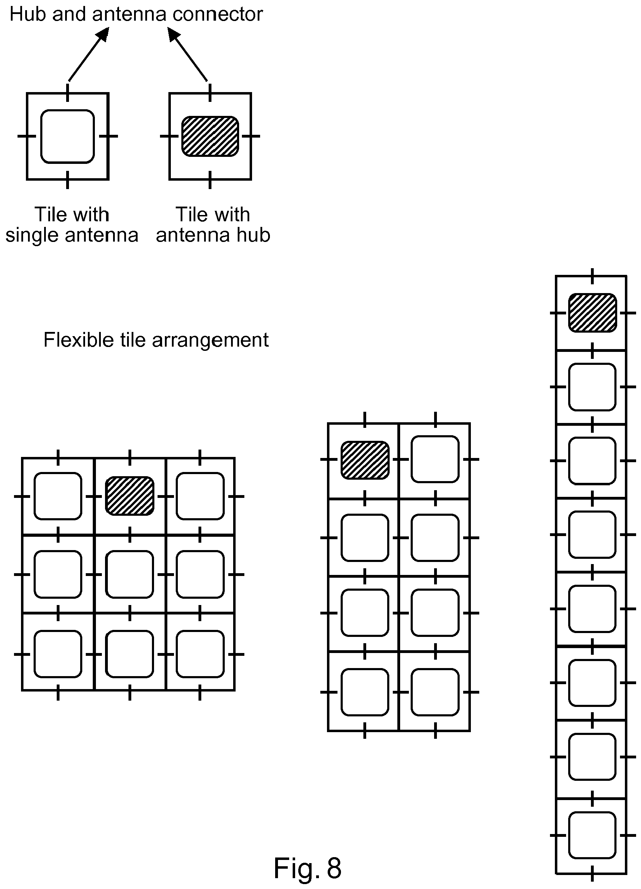

Fig. 8 shows arrangements of antennas of the RFID receiver. The UHF-RFID antenna array has a special design that allows wireless tracking of previously tagged vials. Since large area antennas show weak read capabilities for small vials, the antenna array is comprised of single UHF-RFID antennas connected to an antenna hub, which addresses this issue and also provides for specific localization of vials to be facilitated. These antennas can, for example, be flexibly attached to an acrylic glass board as discussed below.

Continuing with Fig. 8, the configurable antenna array is comprised of single UHF-RFID antennas that are connected to an antenna hub. Each antenna (e.g. a Keon UHF antenna) can be added to the array at a required location in order to configure the array for a specific purpose, for example to fit a specific size of shelf or fit a particular size of side wall. Thus, the array allows a flexible and robust adaptation to meet a user's needs. What is termed an RFID receiver is realized through the combination of the antenna array in combination with an UHF-Reader (e.g. Impinj Speedway R420) with multiplexing capabilities. Antenna ports are connected to the reader and they in turn are used to connect to further antenna Hubs if required. Each hub can attach to the reader and also attach to a number of antennas that make up a specific array, thus one reader can be connected to several arrays, that can be in different shelves of a fridge and/or in a side wall of the fridge, and the size of the overall RFID receiver can be flexibly expanded as required through the addition of further hubs and associated antennas. Thus, the form in which the antennas are organized in the array is flexible. Since not all ports or hubs have to be used in the system, it is possible to configure different surface areas, resulting in a fully flexible arrangement. Just by inserting i.e. attaching single antennas to the hub, and further hubs to the reader, different forms are achieved.

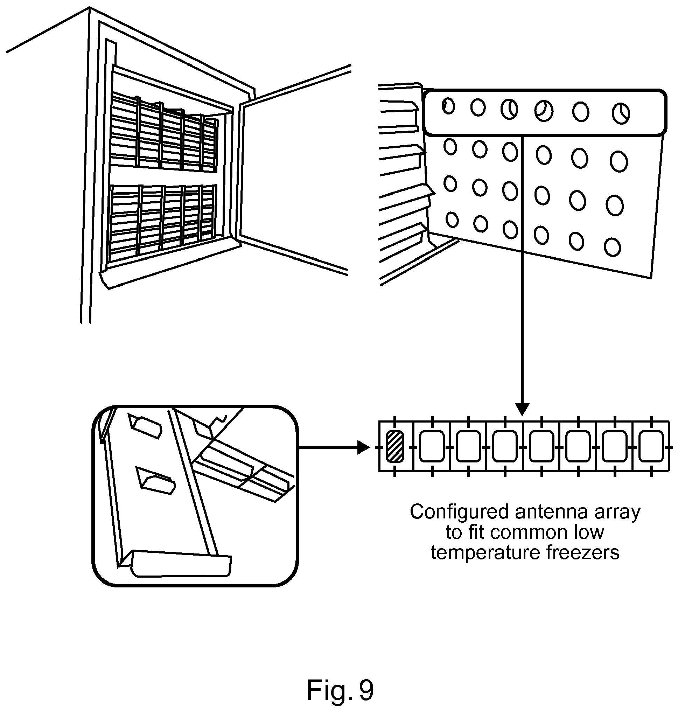

The antenna hubs and UHF antennas shown in Fig. 8 can be attached or integrated onto or into a surface and arranged in several different forms. The combination of surface / hub and surface / antenna is referred to here as tile. Each tile can be added sequentially to form different shapes. The connectors among the different tiles ensure a connection to the antenna port and a physical connection to the system. Ports can be used to either configure single surfaces (for example for a shelf of a fridge as shown in Fig. 9) or they can be connected to each other to form long linear structures (for example for a vertical structure adjacent to a shelf of a fridge as shown in Fig. 9). In this way a flexible ready-to-use asset tracking solution is provided.

Fig. 9 shows a fridge. As described above, the created surfaces (with antenna array and hubs, to which an RFID reader is connected) can be used to track RFID-tagged objects in different environments, where one of these can be a fridge. The technology has been demonstrated to work at different and very low temperatures, and the described array can be utilized to operate in environments such as fridges at -80°C freezers, enabling the tracking of different objects in such environments, with the UHF-RFID antenna array with its special flexible design, allowing for the wireless tracking of previously tagged vials, with specific object localization.

Continuing with Fig. 9, single UHF-RFID antennas are integrated into an acrylic glass to form a whole-single smart shelf, which can replace current boards at freezers and refrigerators or be used as a standalone solution in a different environment or container. The antennas within the array can be configured in different forms and not all antenna hubs from the multiplexer need to be used in the array. In this way, users can flexibly configure the array to their needs. Additionally, environmental sensors (temperature and humidity) are integrated into the shelves to capture relevant information for tracked assets. As discussed above, the smart shelves are connected to an UHF-RFID reader. This design allows detailed information for localization to be acquired, and furthermore minimizes the amount of data to be processed. To address the issue of compatibility of UHF-RFID technology with water, RFID tags in the form of "loop"-tags, are used, which have a short signal range. Such tags are produced for example by Checkpoint Whisper.

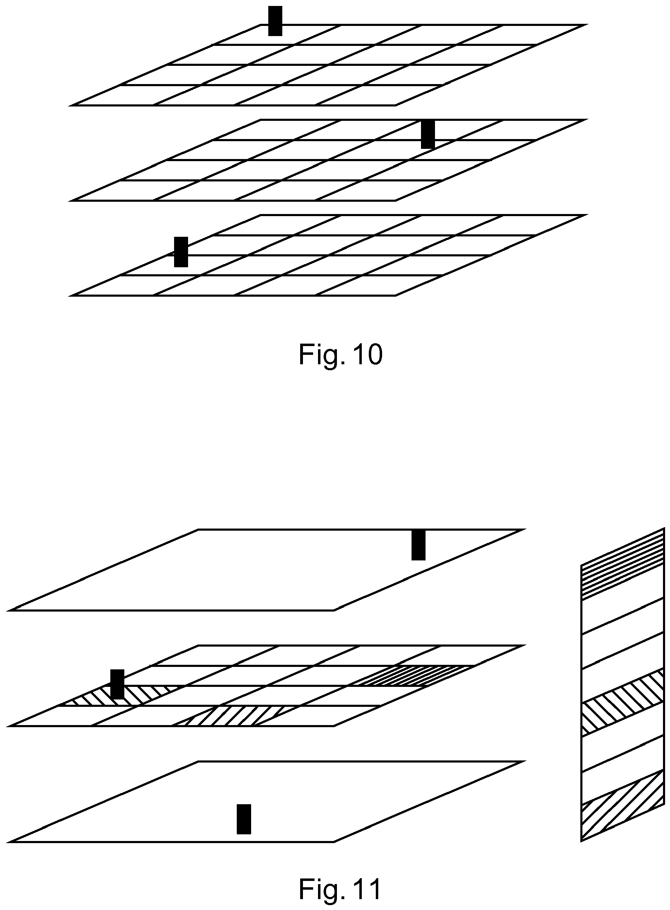

Figs 10-11 provide detail on how a vial with an RFID tag can be located in the fridge of Fig. 9. To conserve energy and determine when there may have been a change in location, the asset tracking system can assesse what has occurred when the door of the fridge closes. The antenna array sends out an interrogation signal, via the reader, and in response the RFID tags attached to vials send out signals. Thus, the interrogation signal can be transmitted when the door of the fridge closes, thereby saving energy. However, the interrogation signal can be transmitted periodically, and/or continuously, in which case detection of movement of the door is not required. In that case, an interrogation signal can be transmitted in such a manner that a vial cannot be placed within the fridge and then removed within an interrogation signal having been transmitted. For example, through the interrogation signal being sent continuously or periodically at a time period over which a vial cannot be placed in the fridge and removed, for example once ever second, or at a higher repetition rate.

In Fig. 10, each shelf of the fridge has integrated within it an antenna array. There are three vials with RFID tags, and it can be determined over which antenna a vial is positioned from the signal strength detected by that antenna. However, the position of the vial over an antenna can be further localized. This is because not only does the antenna over which the vial sit detect a signal but the adjacent antennas detect a signal. Thus, if a centre antenna has the strongest signal and the surrounding four bordering antennas have the same signal strength then it can be determined that the vial is located centrally over that antenna. However, as the vial is moved along a centre line towards an edge, the two antennas bordering at right angles to the centre line will have the same signal whilst the antenna bordering on the side closest to the vial has a stronger signal than the signal from the opposite antenna, again with the strongest signal being for that over which the vial is positioned. This information can be used to determine a more accurate location of the vial. This information can be logged, and a user can then more easily find a specific vial by looking up where it is located in the fridge, and then easily finding it. By using metallic plates as shelf-background, as a backing to each antenna array, it is possible to detect signals in one direction, i.e. over the shelf/antennas. This helps in reducing interference from other shelves.

However, , as shown in Fig. 11, in certain circumstances where the transmission range of the RFID tags is great enough, only one shelf need have an antenna array. Again, shown are three vials sitting on different shelves. The antenna array in the middle shelf can, on the basis of the signal strength as discussed above, determine over or under which antenna a specific vial is located. However, there is an additional one dimensional antenna array orientated vertically, and this is used to determine the vertical location of a vial, and this with the information from the antenna array in the shelf can be used to determine on which shelf the vial is located. The vertically orientated antenna array is not essential, as the location of the vial can be determined using horizontal arrays. But by having the vertical array it is possible to only use one horizontal array in conjunction with the vertical array to determine the locations of vials situation over a number of different shelves. In Fig. 11 the antennas that exhibit the strongest detected signal for the three vials is shown for both the antenna array in the shelf and the vertically aligned array, indicating how each vial can be located. Thus, a reduced number of antennas are required.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses invention.

Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An RFID receiver (30) for an asset tracking system, the RFID receiver comprising:
- a plurality of RFID antennas (40);
wherein, the plurality of RFID antennas are configured to be associated with an object support structure, wherein the object support structure is configured such that one or more objects of a plurality of objects can be placed on the object support structure, and wherein a plurality of RFID tags are configured to attach to the plurality of objects, wherein each object of the plurality of objects can have attached to it a different RFID tag of the plurality of RFID tags; and
wherein, the RFID receiver is configured to detect a signal transmitted from an RFID tag attached to an object of the plurality of objects when the object is supported by the object support structure.

2. RFID receiver according to claim 1, wherein the plurality of RFID antennas are configured to be integrated into the object support structure.

3. RFID receiver according to claim 2, wherein the object support structure comprises a shelf, and wherein at least one subset of the plurality of RFID antennas is configured to be integrated into a base of the shelf.

4. RFID receiver according to any of claims 1-3, wherein at least one subset of the plurality of RFID antennas is configured to be integrated into a structure adjacent to the object support structure.

5. RFID receiver according to claim 4, wherein the object support structure comprises a shelf, and wherein the structure adjacent to the object support structure comprises a side wall structure.

6. RFID receiver according to any of claims 1-5, wherein the object support structure forms part of a refrigerator or cupboard.

7. RFID receiver according to any of claims 1-6, wherein the RFID receiver is a RFID transceiver and is configured to transmit an interrogation signal, and wherein the RFID tag is configured to detect the interrogation signal, and wherein the RFID tag is configured to transmit the signal in response to detection of the interrogation signal by the RFID tag.

8. RFID receiver according to claim 7 when dependent upon claim 6, wherein the RFID receiver is configured to transmit the interrogation signal after a door of the refrigerator or cupboard has moved from an open position to a closed position.

9. RFID receiver according to any of claims 1-8, wherein the RFID receiver is configured to determine that the object is supported by the object support structure upon detection of the signal transmitted by the RFID tag.

10. RFID receiver according to any of claims 1-9, wherein the RFID receiver is configured to determine a location of the object when it is supported by the object support structure.

11. RFID receiver according to claim 10, wherein determination of the location of the object comprises utilisation of a detection signal acquired via at least one antenna of the plurality of antennas for the signal transmitted from the RFID tag.

12. RFID receiver according to any of claims 10-11, wherein the RFID receiver is configured to determine a first detection signal for a first antenna of the plurality of antennas for the signal transmitted from the RFID tag and determine at least one second detection signal for at least one second antenna of the plurality of antennas for the signal transmitted from the RFID tag, and wherein determination of the location of the object comprises a comparison of the first detection signal with the at least one second detection signal.

13. RFID receiver according to claim 12, wherein the RFID receiver is configured to determine a third detection signal for a third antenna of the plurality of antennas for the signal transmitted from the RFID tag and determine at least one fourth detection signal for at least one fourth antenna of the plurality of antennas for the signal transmitted from the RFID tag, wherein the first antenna and the at least one second antenna are in a first sub-set of the plurality of antennas and the third antenna and the at least one fourth antenna are in a second sub-set of the plurality of antennas, and wherein determination of the location of the object comprises a comparison of the third detection signal with the at least one fourth detection signal.

14. RFID receiver according to any of claims 1-13, wherein the RFID receiver is configurable, such that RFID antennas of at least one subset of the plurality of RFID antennas are positioned in a tile arrangement, wherein an RFID antenna is contiguous with a first RFID antenna on one side and contiguous with a second RFID antenna on an opposite side.

15. RFID receiver according to any of claims 1-14, wherein the RFID receiver is configurable, such that RFID antennas of at least one subset of the plurality of RFID antennas are positioned in a tile arrangement, wherein an RFID antenna is contiguous with a first RFID antenna on one side and contiguous with a second RFID antenna on an opposite side and contiguous with a third RFID antenna.

16. RFID receiver to any of claims 1-15, wherein the RFID receiver is configurable, such that RFID antennas of at least one subset of the plurality of RFID antennas are positioned in a tile arrangement, wherein an RFID antenna is contiguous with a first RFID antenna on one side and contiguous with a second RFID antenna on an opposite side and contiguous with a third RFID antenna and contiguous with a fourth antenna.

17. RFID receiver according to claim 16, wherein the third RFID antenna is on an opposite side of the RFID antenna to the fourth RFID antenna.

18. RFID receiver according to any of claims 1-17, wherein the RFID receiver comprises a RFID reader connected to the plurality of RFID antennas.

19. RFID receiver according to claim 18, wherein the RFID receiver comprises a plurality of antenna hubs, wherein the plurality of antenna hubs are configured to communicate with the RFID reader, and wherein a first antenna hub of the plurality of the antenna hubs is connected to a first subset of the plurality of antennas, and wherein a second antenna hub of the plurality of antenna hubs is connected to a second subset of the plurality of antennas that comprises different antennas to the antennas of the first subset.

20. An asset tracking method (300), comprising:
a) associating (310) a plurality of RFID antennas (40) of a RFID receiver (30) with an object support structure (120), wherein the object support structure is configured such that one or more objects of a plurality of objects (110) can be placed on the object support structure, and wherein a plurality of RFID tags (20) are attached to the plurality of objects, wherein each object of the plurality of objects has attached to it a different RFID tag of the plurality of RFID tags; and
b) detecting (320) by the RFID receiver a signal transmitted from an RFID tag attached to an object of the plurality of objects when the object is supported by the object support structure.

21. Method according to claim 20, wherein the plurality of RFID antennas are integrated into the object support structure.

22. Method according to claim 21, wherein the object support structure comprises a shelf, and wherein at least one subset of the plurality of RFID antennas is integrated into a base of the shelf.

23. Method according to any of claims 20-22, wherein at least one subset of the plurality of RFID antennas are integrated into a structure adjacent to the object support structure.

24. Method according to claim 23, wherein the object support structure comprises a shelf, and wherein the structure adjacent to the object support structure comprises a side wall structure.

25. Method according to any of claims 20-24, wherein the object support structure forms part of a refrigerator or cupboard.

26. Method according to any of claims 20-25, wherein the RFID receiver is a RFID transceiver and transmits an interrogation signal, and wherein the signal transmitted from the RFID tag is transmitted in response to the RFID tag detecting the interrogation signal.

27. Method according to claim 26 when dependent upon claim 25, wherein the RFID receiver transmits the interrogation signal after a door of the refrigerator or cupboard has moved from an open position to a closed position.

28. Method according to any of claims 20-27, wherein the RFID receiver determines that the object is supported by the object support structure upon detection of the signal transmitted by the RFID tag.

29. Method according to any of claims 20-28, wherein the RFID receiver determines a location of the object when it is supported by the object support structure.

30. Method according to claim 29, wherein determination of the location of the object comprises utilising a detection signal acquired via at least one antenna of the plurality of antennas for the signal transmitted from the RFID tag.

31. Method according to any of claims 29-30, wherein the RFID receiver determines a first detection signal for a first antenna of the plurality of antennas for the signal transmitted from the RFID tag and determines at least one second detection signal for at least one second antenna of the plurality of antennas for the signal transmitted from the RFID tag, and wherein determination of the location of the object comprises comparing the first detection signal with the at least one second detection signal.

32. Method according to claim 31, wherein the RFID receiver determines a third detection signal for a third antenna of the plurality of antennas for the signal transmitted from the RFID tag and determines at least one fourth detection signal for at least one fourth antenna of the plurality of antennas for the signal transmitted from the RFID tag, wherein the first antenna and the at least one second antenna are in a first sub-set of the plurality of antennas and the third antenna and the at least one fourth antenna are in a second sub-set of the plurality of antennas, and wherein determination of the location of the object comprises a comparison of the third detection signal with the at least one fourth detection signal.

33. Method according to any of claims 20-32, wherein the RFID receiver is configurable, such that RFID antennas of at least one subset of the plurality of RFID antennas are positioned in a tile arrangement, wherein an RFID antenna is contiguous with a first RFID antenna on one side and contiguous with a second RFID antenna on an opposite side.

34. Method to any of claims 20-33, wherein the RFID receiver is configurable, such that RFID antennas of at least one subset of the plurality of RFID antennas are positioned in a tile arrangement, wherein an RFID antenna is contiguous with a first RFID antenna on one side and contiguous with a second RFID antenna on an opposite side and contiguous with a third RFID antenna.

35. Method according to any of claims 20-34, wherein the RFID receiver is configurable, such that RFID antennas of at least one subset of the plurality of RFID antennas are positioned in a tile arrangement, wherein an RFID antenna is contiguous with a first RFID antenna on one side and contiguous with a second RFID antenna on an opposite side and contiguous with a third RFID antenna and contiguous with a fourth antenna.

36. Method according to claim 35, wherein the third RFID antenna is on an opposite side of the RFID antenna to the fourth RFID antenna.

37. Method according to any of claims 20-36, wherein the RFID receiver comprises a RFID reader connected to the plurality of RFID antennas.

38. Method according to claim 37, wherein the RFID receiver comprises a plurality of antenna hubs, wherein the plurality of antenna hubs communicate with the RFID reader, and wherein a first antenna hub of the plurality of the antenna hubs is connected to a first subset of the plurality of antennas, and wherein a second antenna hub of the plurality of antenna hubs is connected to a second subset of the plurality of antennas that comprises different antennas to the antennas of the first subset.

39. A computer program element for controlling an apparatus according to any one of claims 1 to 19, which when executed by a processor is configured to carry out the method of any of claims 20-38.

40. A computer readable medium having stored the program element of claim 39.
